Europäisches Patentamt

**European Patent Office**

Office européen des brevets

(19)

(11) Veröffentlichungsnummer: **0 029 006**
**B1**

(12) # EUROPÄISCHE PATENTSCHRIFT

(45) Veröffentlichungstag der Patentschrift:
13.04.83

(51) Int. Cl.³: **G 02 F 1/01**

(21) Anmeldenummer: **80810335.2**

(22) Anmeldetag: **03.11.80**

(54) **Optischer Bildverstärker.**

(30) Priorität: **08.11.79 CH 10003/79**

(43) Veröffentlichungstag der Anmeldung:
**20.05.81 Patentblatt 81/20**

(45) Bekanntmachung des Hinweises auf die Patenterteilung:
**13.04.83 Patentblatt 83/15**

(84) Benannte Vertragsstaaten:
**CH DE FR GB LI NL SE**

(56) Entgegenhaltungen:
**CH-A-0 378 432**
**DE-A-1 489 926**
**DE-A-2 011 575**
**DE-B-1 263 944**
**FR-A-2 285 640**

(73) Patentinhaber: **GRETAG Aktiengesellschaft,
Althardstrasse 70, CH-8105 Regensdorf (CH)**

(72) Erfinder: **Mast, Fred, Dr., Fürstenlandstrasse 15,
CH-9500 Wil (CH)**
Erfinder: **Waser, Rudolf, Zwinghofstrasse 414,
CH-8173 Neerach (CH)**

(74) Vertreter: **Pirner, Wilhelm et al, Patentabteilung der
CIBA-GEIGY AG Postfach, CH-4002 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Optischer Bildverstärker

Die Erfindung bezieht sich auf eine Vorrichtung zur Verstärkung der Intensität eines optisch erzeugten Bildes gemäß Oberbegriff des Patentanspruchs 1.

Eine der ersten solcher i. a. als optische Bildverstärker bezeichneten Vorrichtungen ist z. B. in der CH-A-301 222 beschrieben. Das Grundprinzip dieser bekannten Vorrichtung besteht darin, daß ein System von zueinander parallel im Abstand angeordneten Barren über eine spiegelnde Fläche auf ein zugeordnetes zweites Barrensystem abgebildet wird, wobei sich die spiegelnde Fläche auf einer durch elektrostatische Feldkräfte deformierbaren Steuerschicht befindet, welche zusammen mit einer lichtelektrischen Leiterschicht in einem elektrostatischen Feld angeordnet ist. Das zu verstärkende Bild wird in gerasterter Form auf die lichtelektrische Leiterschicht abgebildet, wodurch das elektrostatische Feld bildmäßig lokal verändert und eine entsprechende Deformation der Steuerschicht und damit auch der spiegelnden Fläche bewirkt wird. Die deformierte spiegelnde Fläche wird zwischen den Barren des zweiten Barrensystems hindurch auf einem Projektionsschirm abgebildet, auf welchem dann ein dem zu verstärkenden Bild entsprechendes Bild größerer Helligkeit zu sehen ist.

Zur Erzeugung des elektrostatischen Felds sind bei der aus der CH-A-301 222 bekannten Vorrichtung zwei durchsichtige homogene Elektrodenflächen vorhanden, die mit der lichtelektrischen Leiterschicht bzw. der Steuerschicht verbunden und an eine elektrische Spannungsquelle angeschlossen sind. Bei der bildmäßigen Belichtung der lichtelektrischen Leiterschicht ändert sich deren elektrischer Widerstand. Durch die Widerstandsänderung in longitudinaler, d. h. zum elektrischen Feld paralleler Richtung ändert sich lokal die Spannungsaufteilung zwischen der lichtelektrischen Leiterschicht und dem Zwischenraum zwischen dieser und der Steuerschicht, wodurch wiederum eine entsprechende Deformation der Steuerschicht und mit dieser der spiegelnden Fläche hervorgerufen wird.

Dieses Prinzip der Ausnützung der Widerstandsänderung der lichtelektrischen Leiterschicht in longitudinaler Richtung hat eine Reihe von Nachteilen, die z. B. in der CH-A-378 432 ausführlich erläutert sind. Unter anderem ist für eine einigermaßen brauchbare Steuerwirkung eine relativ große Mindestdicke der lichtelektrischen Leiterschicht erforderlich, welche aber anderseits stets die Gefahr von störenden Raumladungseffekten mit sich bringt.

In der CH-A-378 432 ist ein optischer Bildverstärker beschrieben, bei welchem die Nachteile des vorstehend erläuterten bekannten Bildverstärkers dadurch vermieden werden sollen, daß nicht die longitudinale, sondern die transversale lokale elektrische Leitfähigkeits- bzw. Widerstandsänderung der lichtelektrischen Leiterschicht ausgenützt wird. Dazu ist die mit der lichtelektrischen Leiterschicht in Kontakt stehende Elektrode als Streifenraster ausgebildet, wobei die in regelmäßigen Abständen nebeneinander angeordneten, elektrisch leitenden Streifen orthogonal zu den Barren des ersten Barrensystems verlaufen und in wechselnder Folge an den einen und an den anderen Pol einer elektrischen Spannungsquelle angeschlossen sind. Des weiteren ist diesem Elektrodenraster belichtungsseitig ein optisches Streifenraster mit unter vorzugsweise 45° zum Elektrodenraster verlaufenden Rasterstreifen vorgesetzt.

Mit dieser Elektrodenausbildung und -anordnung ändert sich bei Belichtung die Potentialverteilung in der lichtelektrischen Leiterschicht, und es ist allein diese Potentialverteilung in der Schicht, welche die auf die Steuerschicht bzw. die spiegelnde Fläche einwirkenden Kräfte bestimmt. Die lichtelektrische Leiterschicht kann daher beliebig dünn sein, solange nur ihr elektrischer Widerstand nicht durch Nebenschluß ihrer Unterlage beeinträchtigt wird. Außerdem ist dadurch auch die bei der bekannten longitudinalen Widerstands-Modulation vorhandene Schwierigkeit eines hohen spezifischen elektrischen Widerstands der Schicht eliminiert, da eine geeignete Wahl der Spannung zwischen den Elektrodenstreifen und der Dicke der Schicht jeden praktisch verfügbaren Wert erlaubt.

Trotz dieser gegenüber dem mit Longitudinal-Modulation arbeitenden Bildverstärker offensichtlichen Verbesserungen konnte sich jedoch der in der CH-A-378 432 beschriebene Bildverstärker in der Praxis nicht durchsetzen. Einer der Hauptgründe liegt vor allem darin, daß bei der diesem Bildverstärker eigenen Elektrodenkonfiguration mit wechselweiser Polarität der einzelnen Elektrodenstreifen eine unerwünschte Grunddeformation der Steuerschicht auftritt, die gegenüber der durch die bildmäßige Belichtung hervorgerufenen, beabsichtigten Nutzdeformation sehr viel größer ist. Dieses ungünstige Verhältnis zwischen Grund- und Nutzdeformation ist gleichbedeutend mit geringer Empfindlichkeit und geringem Wirkungsgrad der gesamten Anordnung. Eine weitere Schwierigkeit bilden bei diesem bekannten Bildverstärker die in der Praxis nie mit letzter Sicherheit vermeidbaren lokalen Kurzschlüsse zwischen benachbarten Streifen des Elektrodenrasters. Tritt beim bekannten Verstärker ein solcher Kurzschluß auf, so führt dies nicht etwa nur zu einer lokalen Bildstörung, sondern vielmehr zu einem Totalausfall des gesamten Bilds. Der Bildverstärker wird im Kurzschlußfall vollkommen funktionsunfähig.

Die Aufgabe der Erfindung besteht nun darin, eine Vorrichtung der in der CH-A-378 432 beschriebenen Art hinsichtlich Wirkungsgrad und Kurzschluß-Empfindlichkeit zu verbessern.

Die Lösung dieser Aufgabe besteht gemäß der Erfindung in der in der Kennzeichnung des Anspruchs 1 angeführten Maßnahme.

Im folgenden wird die Erfindung anhand der Zeichnung näher erläutert. Es zeigt

Fig. 1 eine schematische Darstellung der Gesamtvorrichtung und

Fig. 2—5 vier Ausführungsbeispiele des .in Fig. 1 mit SE bezeichneten Steuerelements.

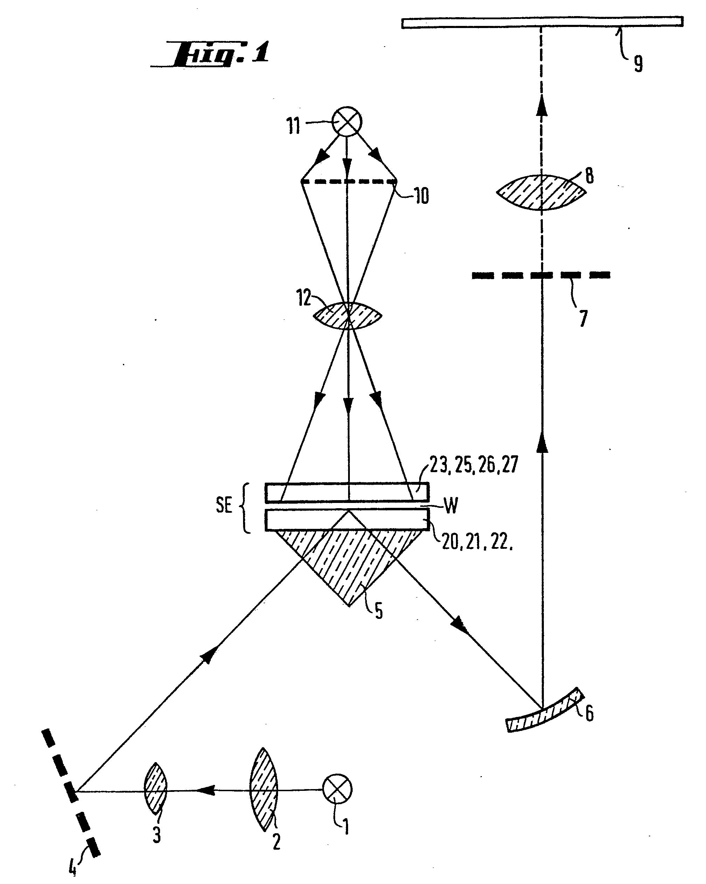

Die Gesamtanordnung der Vorrichtung entspricht im wesentlichen der der bekannten Vorrichtung dieser Art. Das von einer Lichtquelle 1 ausgehende Licht gelangt über zwei Linsen bzw. Linsensysteme 2 und 3 auf ein erstes Barrensystem 4, wird von diesem über ein Prisma 5 auf ein noch zu erläuterndes, die Steuerschicht enthaltendes Steuerelement SE geworfen, gelangt von dort über einen Hohlspiegel 6 zu einem zweiten Barrensystem 7 und wird schließlich von einer weiteren Linse bzw. einem Linsensystem 8 auf eine Projektionsfläche 9 geleitet. Das zu verstärkende Bild 10 wird von einer Lichtquelle 11 beleuchtet und über eine Linse bzw. ein Linsensystem 12 auf die im Steuerelement SE enthaltene lichtelektrische Leiterschicht abgebildet. Die Längskanten der Barren 4 und 7 verlaufen in Fig. 1 senkrecht zur Zeichenebene.

Wie gesagt, insoweit entspricht die erfindungsgemäße Vorrichtung den bekannten Bildverstärkern. Näheres über deren Aufbau und deren Funktion kann der einschlägigen Literatur oder z. B. den schon angeführten CH-A-Nos 301 222 und 378 432 entnommen werden.

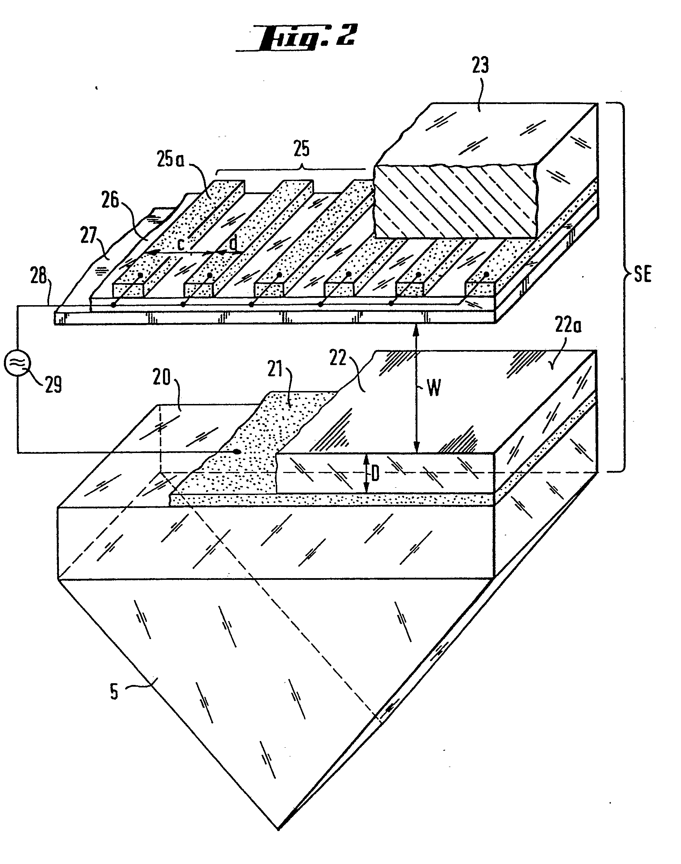

Das Neue der Erfindung liegt vor allem im Steuerelement SE, von welchem vier Ausführungsformen in den Fig. 2—5 dargestellt sind. Die Zeichnung zeigt der Einfachheit und der Übersichtlichkeit halber nur die für das Verständnis der Erfindung wesentlichen Teile des Steuerelements. Rahmen, Halterungen etc. sind weggelassen.

Gemäß Fig. 2 umfaßt das Steuerelement SE in seiner einfachsten Ausführungsform eine durchsichtige untere Trägerplatte 20, auf welcher sich ein durchsichtiger Leitfähigkeitsbelag 21 und die schon genannte Steuerschicht 22 befinden, und eine durchsichtige obere Trägerplatte 23, auf der der Reihe nach ein metallisch leitendes Elektrodenraster 25, eine lichtelektrische Leiterschicht 26 und eine schwarze, lichtundurchlässige und nichtleitende Schutzschicht 27 angeordnet sind. Zwischen der oberen und der unteren Trägerplatte mit ihren respektiven Schichten besteht ein Luftspalt mit einer Weite W von etwa 10—30 μm.

Das Elektrodenraster 25 besteht aus einer Reihe von durchsichtigen, elektrisch leitenden Streifen 25a, die in regelmäßigen Abständen parallel nebeneinander angeordnet und parallel zu den Längskanten der Barren 4 und 7 ausgerichtet sind. Die mit c bezeichnete Rasterperiode des Elektrodenrasters beträgt etwa 50—200 μm und ist vorzugsweise möglichst gering. Die Breite d der Leiterstreifen 25a ist

etwa 1/6 bis 1/4 der Rasterperiode c, vorzugsweise etwa ein 1/5. Bei einer praktischen Rasterperiode von etwa 150 μm beträgt die Streifenbreite dann vorzugsweise etwa 30 μm und der Abstand zwischen je zwei Leiterstreifen demnach etwa 120 μm.

Die einzelnen Leiterstreifen 25a des Elektrodenrasters 25 sind an ihren Enden durch eine in der Zeichnung nur schematisch dargestellte Sammelschiene 28 verbunden und an den einen Pol einer Wechselspannungsquelle 29 angeschlossen. Der andere Pol der Spannungsquelle 29 ist mit dem als Gegenelektrode dienenden Leitfähigkeitsbelag 21 auf der unteren Trägerplatte 20 verbunden. Die elektromotorische Kraft der Spannungsquelle 29 beträgt etwa 200—300 $V_{eff}$ bei einer Frequenz von etwa 100—500 Hz, je nach lichtelektrischer Leiterschicht.

Die einzelnen Leiterstreifen 25a des Elektrodenrasters 25 liegen somit bezüglich der Gegenelektrode 21 alle auf demselben Potential. Ohne Belichtung der lichtelektrischen Leiterschicht 26 ist diese isolierend bzw. schlecht leitend, so daß sich zwischen den einzelnen Leiterstreifen 25a relativ flache Potentialtäler ausbilden, d. h., zwischen den Leiterstreifen herrscht bezüglich der Gegenelektrode 21 ein betragsmäßig kleineres Potential als am Ort der Leiterstreifen 25a. Diese Potentialtäler führen zu einer wellenförmigen Deformation der Steuerschicht 22, wobei diese Wellen entsprechend der Orientierung des Elektrodenrasters parallel zu den Längskanten der Barren 4 und 7 gerichtet sind. Das von der Lichtquelle 1 stammende und an der Oberfläche 22a der Steuerschicht 22 totalreflektierte Licht wird dabei quer zu den Barren 7 abgelenkt und gelangt daher an diesen vorbei auf die Projektionsfläche 9. Die letztere erscheint damit homogen aufgehellt.

Wenn nun die lichtelektrische Leiterschicht 26 homogen beleuchtet wird, gleichen sich die Potentiale auf und zwischen den Leiterstreifen 25a des Elektrodenrasters 25 aus und die Steuerschicht 22 erfährt damit keine Deformation. Das von der Steuerschicht totalreflektierte Licht kann nun nicht an den Barren 7 vorbei auf den Projektionsschirm gelangen, und letzterer bleibt dunkel.

Bei bildmäßiger Beleuchtung der lichtelektrischen Leiterschicht 26 ergibt sich eine entsprechende aber umgekehrte bildmäßige Leuchtdichteverteilung auf der Projektionsfläche, wobei helle Stellen des zu verstärkenden Bildes 10 dunkel und dunkle Stellen hell auf der Projektionsfläche erscheinen.

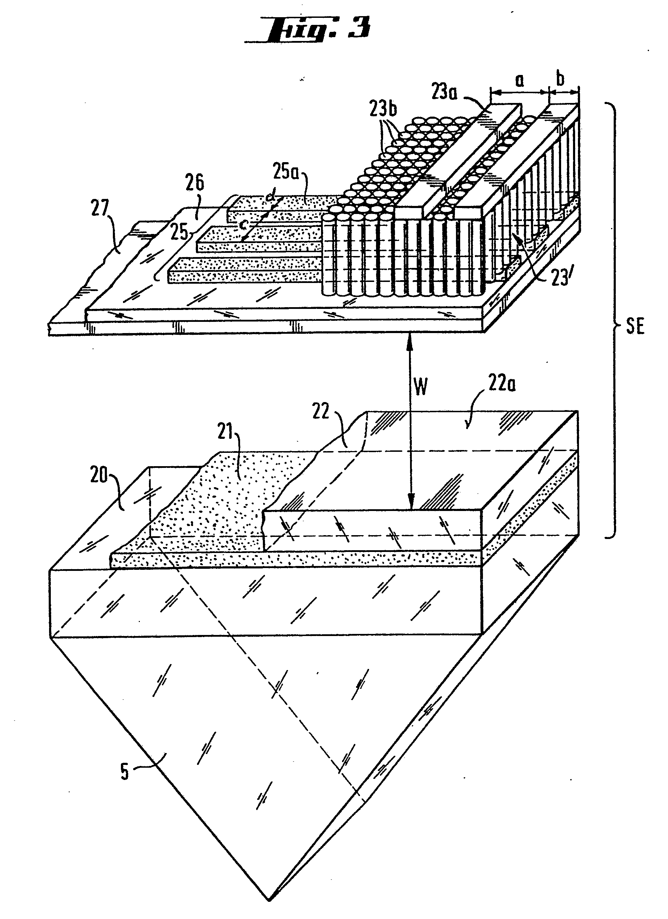

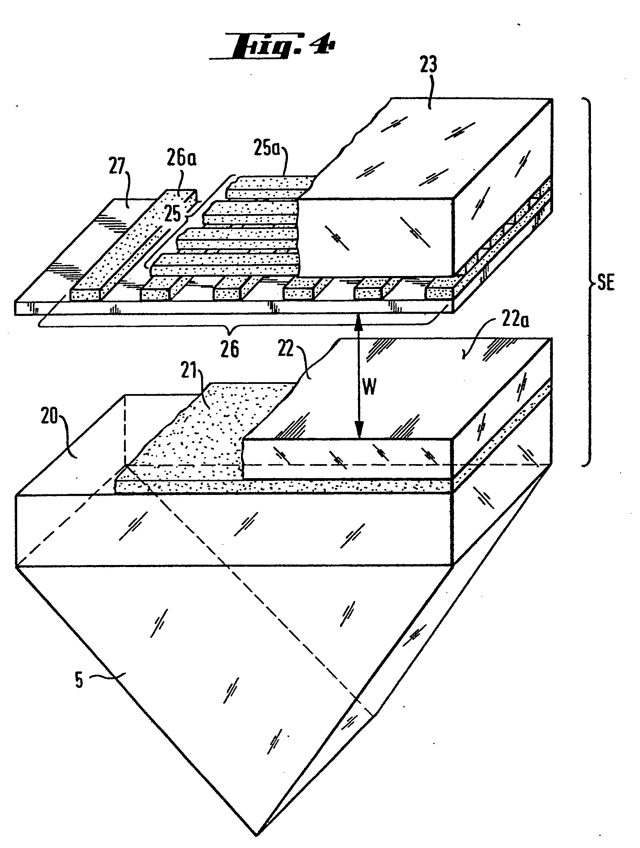

In Fig. 3 ist eine andere, besonders vorteilhafte Ausführungsform des Steuerelements SE dargestellt. Es unterscheidet sich von der Ausführungsform nach Fig. 4 lediglich durch die Ausbildung der oberen Trägerplatte. Diese ist im vorliegenden Falle nicht eine einfache Glasplatte, sondern eine sogenannte Faserplatte 23', die aus einer Vielzahl von zueinander parallelen und zur Plattenebene senkrechten Lichtleitern 23b aus Glas oder Kunststoff besteht, welche miteinander z. B. durch Verschmelzen verbunden sind. Auf der belichtungsseitigen Oberfläche der Faserplatte 23' ist ferner ein optischer Raster aus parallelen Streifen 23a eines lichtundurchlässigen Materials angeordnet.

Die lichtundurchlässigen Streifen 23a sind orthogonal zu den leitenden Streifen 25a des Elektrodenrasters 25 ausgerichtet. Die mit a bezeichnete Rasterperiode des optischen Rasters auf der Faserplatte 23' ist gleich wie oder vorzugsweise um den Faktor 1,1 bis 2, insbesondere etwa 1,5 größer als die Rasterperiode c des Elektrodenrasters 25. Dasselbe gilt auch für die Streifenbreite b, wobei die beiden Raster allerdings komplementär sind, d. h. der Streifenbreite d des Elektrodenrasters 25 entspricht der Abstand zwischen zwei lichtundurchlässigen Streifen 23a und dem Abstand zwischen zwei Elektrodenstreifen 25a entspricht die Streifenbreite b.

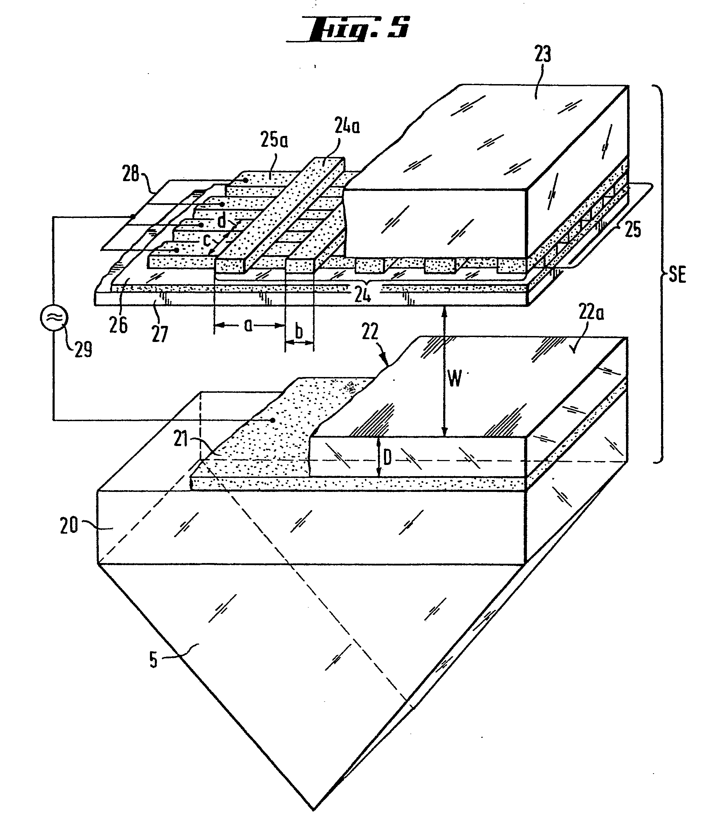

Das in Fig. 3 gezeigte Steuerelement SE ist im Unterschied zu dem nach Fig. 2 derart in den Abbildungstrahlengang eingesetzt, daß die Streifen 25a des Elektrodenrasters 25 nicht parallel, sondern orthogonal zu den Längskanten der Barren 4 und 7 verlaufen. Diese Orientierung des Elektrodenrasters 25 gilt ebenfalls für die weiter unten noch zu beschreibenden Ausführungsformen nach den Fig. 4 und 5.

Ohne Belichtung der lichtelektrischen Leiterschicht 26 bilden sich zwischen den einzelnen Leiterstreifen 25a des Elektrodenrasters 25 wie beim Steuerelement SE der Fig. 2 Potentialtäler aus, die eine wellenförmige Deformation der Steuerschicht 22 bewirken. Da diese Wellen jetzt jedoch orthogonal zu den Barren 7 gerichtet sind, wird das an der Oberfläche 22a der Steuerschicht 22 totalreflektierte Licht durch die Wellendeformation nicht quer, sondern parallel zu den Barren 7 abgelenkt, so daß die Projektionsfläche 9 dunkel bleibt.

Wenn das Steuerelement SE von oben her homogen beleuchtet wird, deckt der auf der Faserplatte 23' befindliche Streifenraster 23a das die lichtelektrische Leiterschicht 26 beaufschlagende Licht streifenweise ab. Dadurch können sich die unterschiedlichen Potentiale auf und zwischen den Leiterstreifen 25a nicht überall ausgleichen, sondern es entsteht eine Potentialverteilung mit einer Vielzahl von entsprechend dem aus Elektrodenraster 25 und optischem Raster 23a gebildeten Kreuzgitter angeordneten Potentialnäpfen, die wiederum eine kreuzgitterartige Deformation der Oberfläche 22a der Steuerschicht 22 zur Folge haben. Diese kreuzgitterartige Deformation führt nun ihrerseits zu einer Ablenkung des Projektionslichts auch quer zu den Barren 7 und damit zu einer Aufhellung der Projektionsfläche 9. Entsprechend ist dann bei bildmäßiger Belichtung der lichtelektrischen Leiterschicht 26 ein dem Bild 10 entsprechendes Bild auf der Projektionsfläche 9 zu sehen, und zwar nicht negativ wie bei Fig. 2, sondern positiv, d. h. helle Bildstellen erscheinen hell und dunkle dunkel.

Beim vorstehend beschriebenen Steuerelement SE nach Fig. 3 ist somit ohne Beleuchtung der lichtelektrischen Leiterschicht 26 eine wellenförmige Grunddeformation parallel zu den Barren 7 vorhanden. Bei Beleuchtung entsteht eine (gewollte) Nutzdeformation quer zu den Barren 7, welche die bildmäßige Aufhellung der Projektionsfläche bewirkt. Versuche haben gezeigt, daß mit einem solchen Steuerelement, bei dem alle Leiterstreifen 25a des Elektrodenrasters auf ein gegenüber der Gegenelektrode 21 gleiches Potential aufgeschaltet sind, die Grund- und die Nutzdeformation im wesentlichen etwa gleich groß sind. Die erfindungsgemäße Vorrichtung hat damit einen wesentlich höheren Wirkungsgrad als die z. B. aus der CH-A-378 432 bekannte Vorrichtung.

Durch das Aufschalten aller Leiterstreifen 25a auf ein und dasselbe Potential verliert aber auch die Kurzschlußgefahr zwischen den einzelnen Leiterstreifen praktisch jede Bedeutung. Ein Kurzschluß führt beim erfindungsgemäßen Steuerelement nämlich lediglich zu einer lokalen Bildstörung, hat aber sonst keinen Einfluß auf das Funktionieren der Vorrichtung.

Wie das Vorstehende zeigt, ist für eine positive Abbildung notwendig, daß das Elektrodenraster 25 orthogonal zu den Barren 7 orientiert ist, und daß die lichtelektrische Leiterschicht 26 mit dem zu verstärkenden Bild in Form eines Streifenrasters beaufschlagt wird, wobei dieser Streifenraster vorzugsweise im wesentlichen orthogonal zum Elektrodenraster gerichtet sein soll.

Die gerasterte Beaufschlagung der lichtelektrischen Leiterschicht 26 mit dem vom zu verstärkenden Bild 10 ausgehenden Licht kann auch auf andere Weise erzielt werden. Gemäß einer besonders zweckmäßigen, in Fig. 4 der Zeichnung dargestellten Ausführungsform der Erfindung ist dazu die lichtelektrische Leiterschicht 26 selbst gerastert, d. h., sie ist nicht wie in Fig. 2 und 3 eine homogene, zusammenhängende Fläche, sondern besteht aus einer Reihe von parallel nebeneinander angeordneten Streifen 26a aus lichtelektrischem Leitermaterial, welche genau wie die Rasterstreifen 23a parallel zu den Barren 4 und 7 verlaufen. Die Breite der lichtelektrischen Leiterstreifen 26a und ihr gegenseitiger Abstand sind gleich wie oder vorzugsweise um einen Proportionalitätsfaktor 1,1 bis 2, insbesondere etwa 1,5 größer als die entsprechenden Abmessungen des Elektrodenrasters 25.

Eine weitere Möglichkeit zur optischen Rasterung des die lichtelektrische Leiterschicht 26 beaufschlagenden Lichts ist in Fig. 5 dargestellt. Hier ist zwischen dem Elektrodenraster 25 und der oberen Trägerplatte 23 ein Spiegelraster 24 vorgesehen, das aus einer Reihe von nach Art von Interferenzspiegeln aufgebauten, nichtleitenden spiegelnden Streifen 24a besteht. Bezüglich Orientierung und Dimensionierung des Spiegelrasters 24 gilt dasselbe wie das zum optischen Raster 23a gemäß Fig. 3 Gesagte.

Die optische Rasterung des die lichtelektrische Leiterschicht 26 beaufschlagenden Lichts kann schließlich auch dadurch erreicht werden, daß an geeigneter Stelle im Strahlengang zwischen Lichtquelle 11 und Steuerelement SE ein geeignetes Raster eingefügt wird oder daß das zu verstärkende Bild 10 in anderer Weise, z. B. mittels Laserstrahlen oder dergleichen, gerastert beleuchtet wird. Es versteht sich, daß das zu verstärkende Bild ohne weiteres auch selbstleuchtend sein kann.

Die optische Rasterung verläuft in der Regel vorzugsweise im wesentlichen orthogonal zum Elektrodenraster 25 und weist vorzugsweise etwas größere (Faktor 1,5) Dimensionen (Rasterperiode, Streifenbreite) auf. Selbstverständlich ist in Sonderfällen aber auch eine davon abweichende Orientierung und/oder Dimensionierung der Rasterung möglich.

Falls die Vorrichtung zur Verstärkung eines TV-Bildes oder eines anderen bereits selbst gerasterten Bilds verwendet werden soll, wird die ganze Anordnung zur Vermeidung von Interferenzerscheinungen zwischen dem TV-Raster und dem Elektrodenraster bzw. optischen Raster der Vorrichtung mit Vorteil so getroffen, daß die Rasterlinien des TV-Bildes oder dergleichen parallel zum Prismenfirst liegen und der Prismenfirst bei negativer Bildverstärkung orthogonal zum Elektrodenraster und zu den Barren verläuft und bei positiver Bildverstärkung in einem Winkel von 45° zum Elektrodenraster bzw. zum optischen Raster angeordnet ist.

Als Steuerschicht 22 kann irgendein elasto-viskoses Material verwendet werden, dessen Oberfläche bzw. dessen optische Eigenschaften durch ein elektrisches Feld deformiert bzw. geändert werden können. Vorzugsweise ist die Steuerschicht eine Gel-Schicht mit einer Dicke D von etwa 30—120 μm, vorzugsweise etwa rund 70 μm. Als Gel kommt z. B. die unter der Bezeichnung Sil-Gel 604 von der Firma Wacker, München, BRD angebotene Qualität in Frage.

**Patentansprüche**

1. Vorrichtung zur Verstärkung der Intensität eines optisch erzeugten Bildes, bei welcher mindestens eine von einer Lichtquelle (1) beleuchtete streifenförmige Zone (4) auf einen zugeordneten Blendenstreifen (7) über eine spiegelnde Fläche (22a) optisch abgebildet wird und die spiegelnde Fläche auf einer durch elektrische Feldkräfte deformierbaren Steuerschicht (22) angeordnet und durch die Steuerschicht deformierbar ist oder durch deren Oberfläche gebildet ist, mit einer lichtelektrischen Leiterschicht (26), auf welche das zu verstärkende Bild abgebildet wird und die ein auf die Steuerschicht (22) einwirkendes elektrisches Feld beeinflußt, welches zwischen einem der lichtelektrischen Leiterschicht (26) belichtungsseitig vorgelagerten, eine Schar von in regelmäßigen Abständen parallel nebeneinander und orthogonal oder parallel zum Blendenstreifen verlaufenden und elektrisch leitenden Streifen (25a) umfassenden Elektrodenraster (25) und einer bezüglich der lichtelektrischen Leiterschicht jenseits der Steuerschicht (22) angeordneten Gegenelektrode (21) herrscht, sowie mit Mitteln (6, 8) zur Abbildung der spiegelnden Fläche (22a) an den Kanten des Blendenstreifens (7) vorbei auf eine Projektionsfläche (9), dadurch gekennzeichnet, daß alle Streifen des Elektrodenrasters (25) bezüglich der Gegenelektrode (21) auf gleichem Potential liegen.

2. Vorrichtung nach Anspruch 1, dadurch gekennzeichnet, daß Rastermittel (23a; 24a; 26a) vorgesehen sind, um das zu verstärkende Bild in Form eines zum Elektrodenraster (25) im wesentlichen orthogonal verlaufenden Streifenrasters auf die lichtelektrische Leiterschicht (26) abzubilden, und daß die Streifen (25a) des Elektrodenrasters (25) orthogonal zum Blendenstreifen (7) verlaufen.

3. Vorrichtung nach Anspruch 2, dadurch gekennzeichnet, daß die Rastermittel ein dem Elektrodenraster (25) belichtungsseitig vorgelagertes Spiegelraster (24) mit parallel im Abstand verlaufenden, optisch zumindest für gewisse Wellenlängenbereiche spiegelnden Spiegelstreifen (24a) umfassen.

4. Vorrichtung nach Anspruch 2, dadurch gekennzeichnet, daß die Rastermittel eine dem Elektrodenraster (25) belichtungsseitig vorgelagerte Faserplatte (23') umfassen, die aus einer Vielzahl von parallelen, im wesentlichen senkrecht zur Plattenebene gerichteten Lichtleitfasern (23b) besteht und auf der belichtungsseitig ein optischer Streifenraster mit optisch zumindest für gewisse Wellenlängenbereiche nicht durchlässigen Rasterstreifen (23a) angeordnet ist.

5. Vorrichtung nach Anspruch 4, dadurch gekennzeichnet, daß die Faserplatte (23') gleichzeitig Träger für das Elektrodenraster (25) und die lichtelektrische Leiterschicht (26) ist.

6. Vorrichtung nach Anspruch 2, dadurch gekennzeichnet, daß die lichtelektrische Leiterschicht (26) aus einzelnen, parallel im Abstand zueinander und im wesentlichen orthogonal zu den leitenden Streifen des Elektrodenrasters (25) verlaufenden lichtelektrischen Leiterstreifen (26a) besteht, und daß diese Streifenrasterung der lichtelektrischen Leiterschicht die Rastermittel bildet.

7. Vorrichtung nach Anspruch 1, dadurch gekennzeichnet, daß das Elektrodenraster (25) und die Gegenelektrode (21) an je einen Pol einer Wechselspannungsquelle (29) angeschlossen sind.

8. Vorrichtung nach einem der Ansprüche 1 bis 7, dadurch gekennzeichnet, daß die Steuerschicht (22) eine Gel-Schicht von 30—120 μm, vorzugsweise <100 μm Dicke ist.

9. Vorrichtung nach einem der Ansprüche 1—8, dadurch gekennzeichnet, daß die Rasterperiode (c) des Elektrodenrasters (25) 50—200 µm, vorzugsweise < 100 µm ist.

10. Vorrichtung nach einem der Ansprüche 1—9, dadurch gekennzeichnet, daß die Breite (d) der leitenden Streifen (25a) des Elektrodenrasters (25) 1/8 bis 1/4, vorzugsweise etwa 1/5 der Rasterperiode (c) beträgt.

11. Vorrichtung nach Anspruch 2, dadurch gekennzeichnet, daß die Rasterperiode (a) des von den Rastermitteln (24a; 23a; 26a) auf der lichtelektrischen Leiterschicht (26) erzeugten Streifenrasters etwa um den Faktor 1,1—2, vorzugsweise etwa um den Faktor 1,5 größer als die Rasterperiode (c) des Elektrodenrasters (25) ist.

12. Vorrichtung nach Anspruch 7, dadurch gekennzeichnet, daß die zwischen dem Elektrodenraster (25) und der Gegenelektrode (21) anliegende Wechselspannung 200—300 V$_{eff}$ ist und ihre Frequenz 100—500 Hz beträgt.

13. Vorrichtung nach einem der Ansprüche 1 bis 12, dadurch gekennzeichnet, daß die der lichtelektrischen Leiterschicht (26) zugewandte Oberfläche (22a) der Steuerschicht (22) das von der Lichtquelle (1) kommende Licht im wesentlichen total reflektiert.

14. Vorrichtung nach einem der Ansprüche 1 bis 13, dadurch gekennzeichnet, daß der lichtelektrischen Leiterschicht (26) steuerschichtseitig eine im wesentlichen lichtundurchlässige und nichtleitende Schicht (27) vorgelagert ist.

15. Vorrichtung nach einem der Ansprüche 1—14, dadurch gekennzeichnet, daß zwischen der Steuerschicht (22) und der lichtelektrischen Leiterschicht (26) ein freier Zwischenraum von 10—30 µm ist.

## Claims

1. Apparatus for intensifying an optically produced image, in which at least one zone (4) in the form of a strip illuminated by a light source (1) is optically imaged on an associated masking strip (7) via a reflecting surface (22a) and the reflecting surface is disposed on a control layer (22) deformable by electrical field forces, and is deformable by the control layer, or ist formed by the surface thereof, having a photoelectric conductor layer (26) on to which the image for intensification is imaged and which influences an electrical field acting on the control layer (22) and operative between (a) an electrode raster (25) preceding the photoelectric conductor layer (26) on the exposure side and comprising a group of regularly spaced parallel electrically conductive strips (25a) extending at right angles or parallel to the masking strip, and (b) a co-acting electrode (21) disposed beyond the control layer (22) with respect to the photoelectric conductor layer, and means (6, 8) for imaging the reflecting surface (22a) past the edges of the masking strip (7) on to a projection surface (9), characterised in that all the strips of the electrode raster (25) are at the same potential with respect to the co-acting electrode (21).

2. Apparatus according to claim 1, characterised in that raster means (23a; 24a; 26a) are provided for imaging the image for intensification on the photoelectric conductor layer (26) in the form of a strip raster extending substantially at right angles to the electrode raster (25), and that the strips (25a) of the electrode raster (25) extend at right angles to the masking strip (7).

3. Apparatus according to claim 2, characterised in that the raster means comprise a mirror raster (24) which precedes the electrode raster (25) on the exposure side and which has parallel spaced mirror strips (24a) optically reflecting at least for certain wavelengths ranges.

4. Apparatus according to claim 2, characterised in that the raster means comprise a fibre plate (23') which precedes the electrode raster (25) on the exposure side and which consists of a plurality of parallel optical fibres (23b) extending substantially perpendicularly to the plate plane, and an optical strip raster having raster strips (23a) optically opaque at least to certain wavelength ranges is disposed on said plate (23') on the exposure side.

5. Apparatus according to claim 4, characterised in that the fibre plate (23') is also the support for the electrode raster (25) and the photoelectric conductor layer (26).

6. Apparatus according to claim 2, characterised in that the photoelectric conductor layer (26) consists of individual parallel spaced photoelectric conductor strips (26a) extending substantially at right angles to the conductive strips of the electrode raster (25), and that this strip rastering of the photoelectric conductor layer forms the raster means.

7. Apparatus according to claim 1, characterised in that the electrode raster (25) and the co-acting electrode (21) are each connected to one terminal of an a. c. voltage source (29).

8. Apparatus according to one of claims 1 to 7, characterised in that the control layer (22) is a gel layer of 30—120 µm, preferably less than 100 µm thickness.

9. Apparatus according to one of claims 1 to 8, characterised in that the raster period (c) of the electrode raster (25) is 50—200 µm, preferably less than 100 µm.

10. Apparatus according to one of claims 1 to 9, characterised in that the width (d) of the conductive strips (25a) of the electrode raster (25) is 1/8 to 1/4, preferably about 1/5 of the raster period (c).

11. Apparatus according to claim 2, characterised in that the raster period (a) of the strip raster produced by the raster means (24a; 23a; 26a) on the photoelectric conductive layer (26) is approximately a factor of 1.1—2, preferably approximately a factor of 1.5, greater than the raster period (c) of the electric raster (25).

12. Apparatus according to claim 7, characterised in that the a. c. voltage between the electrode raster (25) and the co-acting electrode

(21) is 200—300 $V_{eff}$ and its frequency is 100—500 Hz.

13. Apparatus according to one of claims 1 to 12, characterised in that the surface (22a) of the control layer (22) facing the photoelectric conductor layer (26) substantially totally reflects the light coming from the light source (1).

14. Apparatus according to any one of claims 1 to 13, characterised in that the photoelectric conductor layer (26) is precedet by a subtantially light-opaque and non-conductive layer (27) on the control layer side.

15. Apparatus according to one of claims 1 to 14, characterised in that there is a free gap of 10—30 μm between the control layer (22) and the photoelectric conductor layer (26).

## Revendications

1. Dispositif pour renforcer l'intensité d'une image produite optiquement, selon lequel au moins une zone (4) en forme de bande d'un réseau, éclairée par une source lumineuse (1), forme par l'intermédiaire d'une surface réfléchissante (22a) une image optique sur un ensemble associé de bandes (7) formant écran, et la surface réfléchissante est disposée sur une couche (22) de commande, déformable sous l'effet des forces d'un champ électrique et est déformable sous l'effet de la couche de commande, ou bien la surface réfléchissante est formée par la surface supérieure de la couche de commande comportant une couche conductrice photoélectrique (26), sur laquelle est projetée l'image à renforcer et qui influe sur un champ électrique agissant sur la couche de commande (22), ce champ régnant entre un réseau (25) d'électrodes [disposées du côté de l'éclairement de la couche conductrice photoélectrique (26) et comprenant un ensemble de bandes (25a) conductrices de l'électricité, disposées parallèlement les unes aux autres à des intervalles réguliers et perpendiculaires ou parallèles aux bandes de l'écran] et une contre-électrode (21) disposée du même côte de la couche (22) de commande que la couche conductrice photoélectrique, ce dispositif comportant également des moyens (6, 8) pour projeter l'image des surfaces réfléchissantes (22a), en passant le long des bords de l'ensemble de bandes (7) formant écran, sur une surface de projection (9), dispositif caractérisé en ce que toutes les bandes du réseau (25) d'électrodes se trouvent au même potentiel par rapport à la contre-électrode (21).

2. Dispositif selon la revendication 1, caractérisé en ce que sont prévus des moyens de tramage (23a; 24a; 26a) destinés à projeter sur la couche conductrice photoélectrique (26), une représentation de l'image à renforcer, sous forme d'un réseau de bandes essentiellement perpendiculaires au réseau (25) d'électrodes, et en ce que les bandes (25a) du réseau d'électrodes (25) sont perpendiculaires aux bandes (7) formant écran.

3. Dispositif selon la revendication 2, caractérisé en ce que les moyens de tramage comprennent un réseau réfléchissant (24) placé en avant, dans le sens de l'éclairement, du réseau (25) d'électrodes et comportant des bandes réfléchissantes (24a) parallèles et espacées et ayant un pouvoir de réflexion optique au moins pour certains domaines de lonqueurs d'onde.

4. Dispositif selon la revendication 2, caractérisé en ce que les moyens de tramage comprennent une plaque de fibres (23') disposée en avant, dans le sens de l'éclairement, du réseau (25) d'électrodes, plaque qui consiste en un grand nombre de fibres photoconductrices parallèles, disposées pour l'essentiel perpendiculairement au plan de la plaque et sur laquelle, du côté de l'éclairement, est placé un réseau optique de bandes comportant des bandes (23a) optiquement opaques au moins pour certains domaines de lonqueurs d'onde.

5. Dispositif selon la revendication 4, caractérisé en ce que la plaque de fibres (23') constitue en même temps un support pour le réseau d'électrodes (25) et la couche conductrice photoélectrique (26).

6. Dispositif selon la revendication 2, caractérisé en ce que la couche conductrice photoélectrique (26) consiste en des bandes conductrices photoélectriques (26a) séparées, disposées parallèment à distance les unes des autres et pour l'essentiel perpendiculairement aux bandes conductrices du réseau (25) d'électrodes, et en ce que cette disposition en réseau de bandes de la couche conductrice photoélectrique forme le moyen de tramage.

7. Dispositif selon la revendication 1, caractérisé en ce que le réseau d'électrodes (25) et la contre-électrode (21) sont chacun reliés à un pôle d'une source (29) de tension alternative.

8. Dispositif selon l'une quelconque des revendications 1 à 7, caractérisé en ce que la couche de commande (22) est une couche de gel de 30 à 120 microns, avantageusement de moins de 100 microns, d'épaisseur.

9. Dispositif selon l'une quelconque des revendications 1 à 8, caractérisé en ce que la période (c) du réseau d'électrodes (25) est de 50 à 200 micromètres, avantageusement de moins de 100 micromètres.

10. Dispositif selon l'une quelconque des revendications 1 à 9, caractérisé en ce que la largeur (d) des bandes conductrices (25a) du réseau d'électrodes (25) représente le 1/6 au 1/4, avantageusement le 1/5 environ de la période (c) du réseau.

11. Dispositif selon la revendication 2, caractérisé en ce que la période (a) du réseau de bandes formé par les moyens (24a; 23a; 26a) de formation de réseau sur la couche conductrice photoélectrique (26) est supérieure d'un facteur d'environ 1,1 à 2, de préférence d'un facteur d'environ 1,5, à la période (c) du réseau des électrodes (25).

12. Dispositif selon la revendication 7, caractérisé en ce que la tension alternative entre le réseau d'électrodes (25) et la contre-électrode (21) est de 200 à 300 volts efficaces et sa fréquence se situe entre 100 et 500 Hz.

13. Dispositif selon l'une quelconque des revendications 1 à 12, caractérisé en ce que la surface (22a) de la couche de commande (22) tournée vers la couche conductrice photoélectrique (26) réfléchit de manière essentiellement totale la lumière provenant de la source lumineuse (1).

14. Dispositif selon l'une quelconque des revendications 1 à 13, caractérisé en ce qu'une couche (27), non conductrice et essentiellement opaque, est placée, du côté de la couche de commande, devant la couche conductrice photoélectrique (26).

15. Dispositif selon l'une quelconque des revendications 1 à 14, caractérisé en ce qu'il existe entre la couche de commande (22) et la couche conductrice photoélectrique (26) un espace intermédiaire libre de 10 à 30 micromètres.

*Fig. 1*

Fig. 2

Fig. 3

## Fig. 4

Fig. 5